# EUROPEAN PATENT APPLICATION

(11) **EP 4 435 471 A1**
(43) Date of publication of application: **25.09.2024**
(21) Application number: 22895696.7
(22) Date of filing: 18.11.2022
(51) Int. Cl.: G01S 7/497

(54) **DISTANCE MEASURING DEVICE**

(30) Priority: 18.11.2021 JP 2021187618
(71) Applicant: Pioneer Corporation, Tokyo 113-0021 (JP); Pioneer Smart Sensing Innovations Corporation, Tokyo 113-0021 (JP)
(72) Inventor: HOSOI Kenichiro, Kawagoe-shi, Saitama 350-8555 (JP)
(74) Representative: Vossius & Partner Patentanwälte Rechtsanwälte mbB
(86) International application number: PCT/JP2022/042828
(87) International publication number: WO 2023/090415

(57) **Abstract**

A distance measurement apparatus (10) is an apparatus that emits light through a transmissive member (20) and detects reflection light from a target object. The distance measurement apparatus (10) includes a light receiving unit (180) and a switching control unit (121). The light receiving unit (180) receives internal reflection light including reflection light reflected by the transmissive member (20) and the reflection light from the target object. The switching control unit (121) switches a detection process on the reflection light from the target object by using a light reception result of the internal reflection light by the light receiving unit (180).

## Description

### TECHNICAL FIELD

The present invention relates to a distance measurement apparatus.

### BACKGROUND ART

In recent years, development of distance measurement apparatuses that can be used for autonomous driving of an automobile and the like has been performed. An example of the distance measurement apparatus includes a distance measurement apparatus that measures a distance to a surrounding object by measuring a time it takes for emitted light to be reflected by the object and return.

In such a distance measurement apparatus, the presence of an attached-matter on an emission window, through which the light is emitted, affects the distance measurement.

Patent Document 1 describes monitoring a light reception power of light and operating a window cleaning device when it is necessary to remove stains and the like from a window part.

### RELATED DOCUMENT

### PATENT DOCUMENT

Patent Document 1: PCT Japanese Translation Patent Publication No. 2009-503486

### SUMMARY OF THE INVENTION

### TECHNICAL PROBLEM

Meanwhile, in some cases, such as a case where the distance measurement apparatus does not include a window cleaning device, it is not possible to immediately remove stains.

In a situation in which an attached-matter occurs on an emission window as described above, a light receiving unit is saturated by light reflected at a window portion, and an influence of the saturation may remain on a reception light signal for a relatively long period of time. Then, in a period in which the influence of the saturation remains, reflection light from a measurement target object may not be detected.

An example of a problem to be solved by the present invention is to improve a probability of distance measurement under a situation in which there is an influence of an attached-matter.

### SOLUTION TO PROBLEM

According to the invention described in claim 1, there is provided a distance measurement apparatus that emits light through a transmissive member and detects reflection light from a target object, the distance measurement apparatus including: a light receiving unit that receives internal reflection light including reflection light reflected by the transmissive member and the reflection light from the target object; and a switching control unit that switches a detection process of the reflection light from the target object by using a light reception result of the internal reflection light by the light receiving unit.

### BRIEF DESCRIPTION OF THE DRAWINGS

Fig. 1 is a diagram illustrating a configuration of a distance measurement apparatus according to a first embodiment.
Fig. 2 is a diagram illustrating the distance measurement apparatus according to the first embodiment.
Fig. 3 is a diagram illustrating in detail the configuration of the distance measurement apparatus according to the first embodiment.
Fig. 4 is a diagram illustrating a hardware configuration of a control unit according to the first embodiment.
Fig. 5 is a diagram illustrating a waveform of a reception light signal by a light receiving unit.
Fig. 6 is a flowchart illustrating a flow of a first example of a switching process performed by a switching control unit according to the first embodiment.
Fig. 7 is a diagram illustrating another example of the waveform of the reception light signal of the light receiving unit.
Fig. 8 is a flowchart illustrating a flow of a second example of the switching process performed by the switching control unit according to the first embodiment.
Fig. 9 is a diagram illustrating a map indicating a distribution of a reception light intensity of internal reflection light in a frame and a map indicating a distribution of a saturation time.
Fig. 10 is a flowchart illustrating a flow of a process performed by a switching control unit according to a second embodiment.

### DESCRIPTION OF EMBODIMENTS

Hereinafter, embodiments according to the present invention will be described by using the drawings. In all of the drawings, the same components are denoted by the same reference numerals, and description thereof is not repeated as appropriate.

### (First Embodiment)

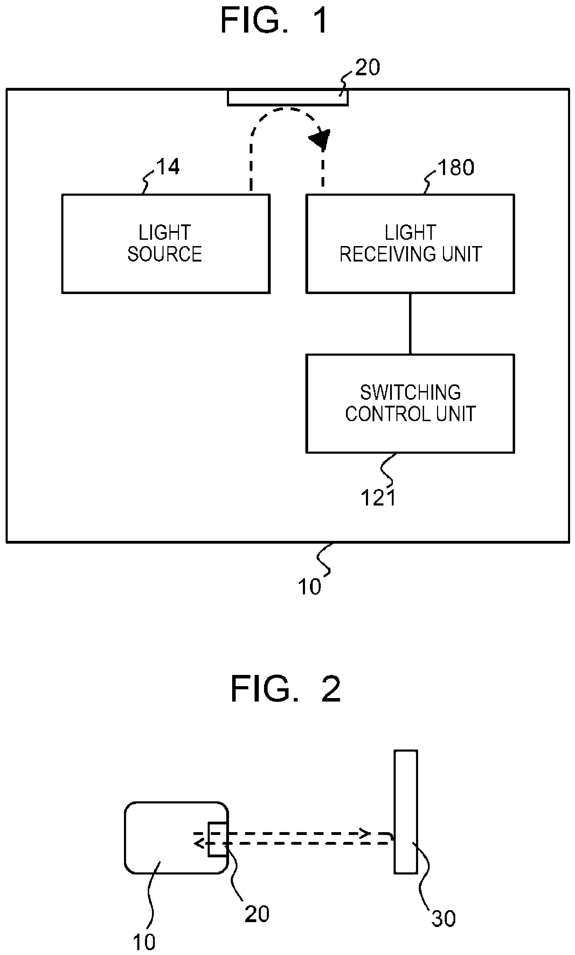

Fig. 1 is a diagram illustrating a configuration of a distance measurement apparatus 10 according to a first embodiment. Fig. 2 is a diagram illustrating the distance measurement apparatus 10 according to the present embodiment. In Figs. 1 and 2, broken line arrows schematically indicate paths of light. The distance measurement apparatus 10 according to the present embodiment is an apparatus that emits light through a transmissive member 20 and detects reflection light from a target object 30. The distance measurement apparatus 10 includes a light receiving unit 180 and a switching control unit 121. The light receiving unit 180 receives internal reflection light including reflection light reflected by the transmissive member 20, and the reflection light from the target object 30. The switching control unit 121 switches a detection process of the reflection light from the target object 30 by using a light reception result of the internal reflection light by the light receiving unit 180. Details will be described below.

The distance measurement apparatus 10 emits light output from a light source 14 to an outside of the distance measurement apparatus 10 mainly through the transmissive member 20 as illustrated in Fig. 2. Meanwhile, at least a part of the light output from the light source 14 is reflected inside the distance measurement apparatus 10 as illustrated in Fig. 1, and becomes internal reflection light. The internal reflection light is received by the light receiving unit 180. This internal reflection light also includes the light reflected by the transmissive member 20. In addition, in a case where attached-matter exists at the transmissive member 20, reflection light caused by the attached-matter is included in the internal reflection light.

The transmissive member 20 is a light transmissive member that partitions an inside and the outside of the distance measurement apparatus 10. The transmissive member 20 is made of, for example, glass or resin. At least one surface of the transmissive member 20 is exposed to an external space of the distance measurement apparatus 10, and stains, raindrops, and the like may adhere to the surface. The reflection light caused by the attached-matter includes, for example, light reflected at an interface between the transmissive member 20 and the attached-matter, light reflected inside the attached-matter, and light reflected at an interface between the attached-matter and air. The light receiving unit 180 receives the internal reflection light and the reflection light from the target object 30. The switching control unit 121 switches a detection process of the reflection light from the target object 30 by using a light reception result of the internal reflection light by the light receiving unit 180. The light reception result of the internal reflection light includes a light reception result in a period in which an influence of the light reception of the internal reflection light occurs. The detection process will be described below in detail. The target object 30 is not an attached-matter to the transmissive member 20, that is, an object not in contact with the transmissive member 20.

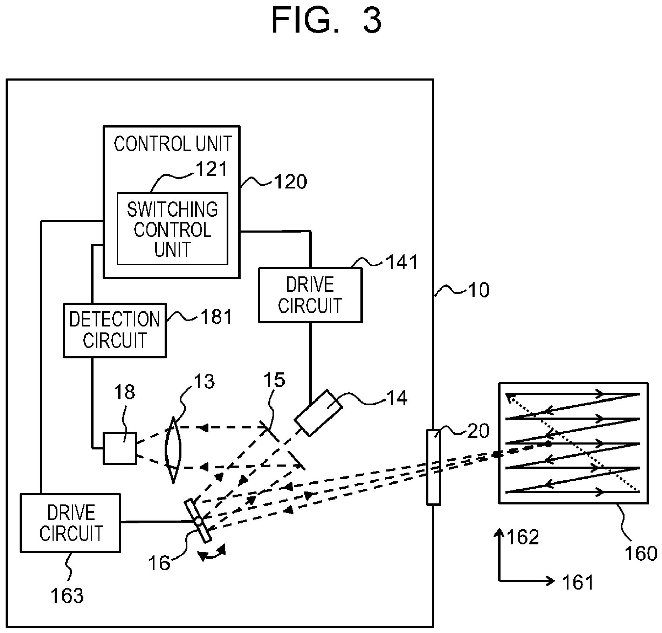

Fig. 3 is a diagram illustrating in detail the configuration of the distance measurement apparatus 10 according to the present embodiment. In this diagram, a broken line arrow schematically indicates a path of light. The configuration of the distance measurement apparatus 10 will be described in detail with reference to this diagram.

The distance measurement apparatus 10 is an apparatus that measures a distance from the distance measurement apparatus 10 to an object (target object 30) located within a scanning range 160 based on, for example, a difference between an emission timing of pulsed-light and a light reception timing of reflection light (reflected pulsed-light). The pulsed-light is light such as infrared light, for example. In addition, the pulsed-light is, for example, a laser pulse. The pulsed-light that is output from the light source 14 provided in the distance measurement apparatus 10 and is emitted to the outside of the distance measurement apparatus 10 through the transmissive member 20 is reflected by the object, and at least a part thereof returns toward the distance measurement apparatus 10. Then, the reflection light passes through the transmissive member 20 again, and is incident into the distance measurement apparatus 10. The reflection light incident into the distance measurement apparatus 10 is received by the light receiving unit 180 and an intensity thereof is detected. Here, the distance measurement apparatus 10 measures a time from when pulsed-light is emitted from the light source 14 to when reflection light is detected by the light receiving unit 180. Then, a control unit 120 provided in the distance measurement apparatus 10 calculates a distance between the distance measurement apparatus 10 and the object by using the measured time and a propagation speed of the pulsed-light. The distance measurement apparatus 10 is, for example, a laser imaging detection and ranging or laser illuminated detection and ranging (LIDAR) device or a light detection and ranging (LiDAR) device.

The light source 14 emits pulsed-light. The light source 14 is, for example, a laser diode. The light receiving unit 180 includes a light receiving element 18 and a detection circuit 181. The light receiving element 18 receives the pulsed-light incident onto the distance measurement apparatus 10 and the internal reflection light described above. The light receiving element 18 is a photodiode such as an avalanche photodiode (APD), for example.

In the example of Fig. 3, the distance measurement apparatus 10 further includes a movable mirror 16. The movable mirror 16 is, for example, a uniaxially movable or biaxially movable MEMS mirror. By changing a direction of a reflecting surface of the movable mirror 16, an emission direction of pulsed-light emitted from the distance measurement apparatus 10 can be changed. In a case where the movable mirror 16 is a biaxially movable MEMS mirror, a raster scan can be performed within a predetermined range with the pulsed-light by biaxially driving the movable mirror 16.

The control unit 120 generates point group data including measurement results using a plurality of pulsed-light beams. For example, in a case where a raster scan is performed within the scanning range 160, the linear scan is performed by changing the emission direction of light to a first direction 161. The point group data including a plurality of measurement results within the scanning range 160 can be generated by performing a plurality of linear scans while changing the emission direction of light to a second direction 162. In the example of this diagram, the first direction 161 and the second direction 162 are orthogonal to each other.

A unit of the point group data generated by one raster scan is called a frame. After the measurement for one frame is completed, the emission direction of light returns to an initial position, and the measurement for the next frame is performed. In this manner, frames are repeatedly generated. In the point group data, a distance measured by using pulsed-light is associated with information indicating the emission direction of the pulsed-light. Alternatively, the point group data may include three-dimensional coordinates indicating a reflection point of the pulsed-light. The control unit 120 generates the point group data by using the calculated distance and information indicating an angle of the movable mirror 16 when emitting each pulsed-light. The generated point group data may be output to the outside of the distance measurement apparatus 10, or may be held in a storage device accessible by the control unit 120.

In the example of this diagram, the distance measurement apparatus 10 further includes a perforated mirror 15 and a condenser lens 13. The pulsed-light output from the light source 14 passes through a hole of the perforated mirror 15, is reflected by the movable mirror 16, and then is emitted from the distance measurement apparatus 10. In addition, reflection light incident onto the distance measurement apparatus 10 is reflected by the movable mirror 16 and the perforated mirror 15, and then is incident onto the light receiving unit 180 through the condenser lens 13. The distance measurement apparatus 10 may further include a collimating lens, a mirror, and the like.

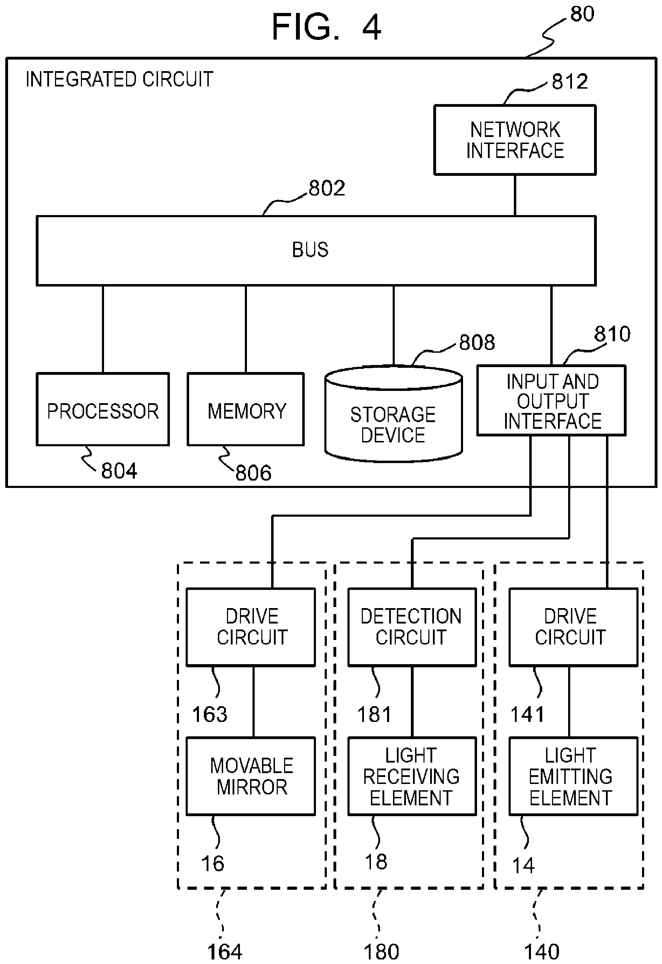

The control unit 120 can control a light emitting unit 140, the light receiving unit 180, and a movable reflection unit 164 (see Fig. 4). The light emitting unit 140, the light receiving unit 180, and the movable reflection unit 164 are included in the distance measurement apparatus 10. The light emitting unit 140 includes the light source 14 and a drive circuit 141. The light receiving unit 180 includes a light receiving element 18 and a detection circuit 181. The movable reflection unit 164 includes the movable mirror 16 and a drive circuit 163. The drive circuit 141 is a circuit for causing the light source 14 to emit light based on a control signal from an integrated circuit 80 and includes, for example, a switching circuit or a capacitance element. The detection circuit 181 includes an I-V converter or an amplifier and outputs a signal indicating a detected intensity of light by the light receiving element 18. The control unit 120 acquires a reception light signal from the light receiving unit 180, and performs a detection process to be described below on the reception light signal to detect a peak by the reflection light from the target object 30. Then, a distance from the distance measurement apparatus 10 to the target object 30 in the scanning range 160 is calculated as described above by using a light reception timing of the detected peak and an emission timing of light. The control unit 120 includes the switching control unit 121, and the switching control unit 121 performs switching of the detection process for distance measurement.

Fig. 4 is a diagram illustrating a hardware configuration of the control unit 120 according to the present embodiment. The control unit 120 is implemented by using an integrated circuit 80. The integrated circuit 80 is, for example, a system on chip (SoC).

The integrated circuit 80 includes a bus 802, a processor 804, a memory 806, a storage device 808, an input and output interface 810, and a network interface 812. The bus 802 is a data transmission path for the processor 804, the memory 806, the storage device 808, the input and output interface 810, and the network interface 812 to transmit and receive data to and from each other. Meanwhile, a method of mutually connecting the processor 804 and the like is not limited to bus connection. The processor 804 is an arithmetic processing device implemented by using a microprocessor or the like. The memory 806 is a memory implemented by using a random access memory (RAM) or the like. The storage device 808 is a storage device implemented by using a read only memory (ROM), a flash memory, or the like.

The input and output interface 810 is an interface for connecting the integrated circuit 80 to peripheral devices. In this diagram, the drive circuit 141 of the light source 14, the detection circuit 181 of the light receiving element 18, and the drive circuit 163 of the movable mirror 16 are connected to the input and output interface 810.

The network interface 812 is an interface for connecting the integrated circuit 80 to a communication network. This communication network is a communication network such as a controller area network (CAN), Ethernet, and low voltage differential signaling (LVDS), for example. A method of connecting the network interface 812 to the communication network may be a wireless connection or a wired connection.

The storage device 808 stores a program module for implementing the function of the control unit 120 including the switching control unit 121. The processor 804 implements the function of the control unit 120 including the switching control unit 121 by reading this program module into the memory 806 and executing the program module.

A hardware configuration of the integrated circuit 80 is not limited to the configuration illustrated in this diagram. For example, the program module may be stored in the memory 806. In this case, the integrated circuit 80 may not include the storage device 808.

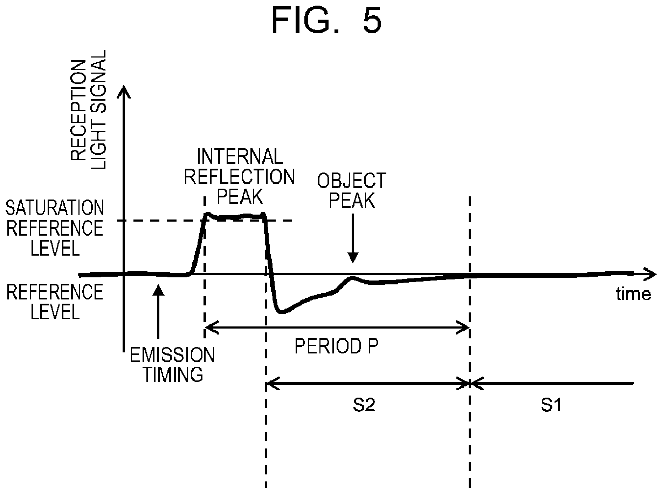

Fig. 5 is a diagram illustrating a waveform of a reception light signal by the light receiving unit 180. The internal reflection light described above is received by the light receiving unit 180 immediately after light emission from the light source 14. On the other hand, reflection light from the target object 30 is received by the light receiving unit 180 at a timing corresponding to a distance from the distance measurement apparatus 10 to the target object 30. In a case where the target object 30 is sufficiently far from the distance measurement apparatus 10, in the reception light signal output from the light receiving unit 180, a peak obtained by receiving the internal reflection light (hereinafter, also referred to as "internal reflection peak") and a peak obtained by receiving the reflection light from the target object 30 (hereinafter, also referred to as "object peak") appear in a state of being separated from each other. That is, in this case, it can be said that a first peak in the reception light signal after emission of light is the internal reflection peak, and second and subsequent peaks are object peaks. Meanwhile, as the target object 30 becomes closer to the distance measurement apparatus 10, these peaks become closer to each other.

Here, in a case where there is an attached-matter at the transmissive member 20, a peak intensity exceeds a detection range of the light receiving unit 180 due to the reception of the internal reflection light, and the reception light signal of the light receiving unit 180 may be saturated as illustrated in Fig. 5. If the light receiving unit 180 is saturated once, it takes a time to return to an original signal level (reference level) due to charge accumulation of the light receiving element 18 and the like. Then, if the reflection light from the target object 30 is incident onto the light receiving unit 180 until the signal level returns to the original signal level, it is necessary to detect the object peak while the influence of the light receiving of the internal reflection light exists.

The reception light signal is a signal output from the detection circuit 181 and input to the control unit 120. The reference level is, for example, a reception light signal level in a situation in which no light is incident onto the light receiving element 18, and is a reception light signal level in a situation in which pulsed-light is not incident onto the light receiving element 18. In the example of this diagram, as the reception light intensity by the light receiving element 18 is increased, the larger reception light signal is output in a positive direction. Meanwhile, the reception light signal is a signal reflecting circuit characteristics of the light receiving element 18 and the detection circuit 181, and a negative reception light signal may be output by the circuit characteristics illustrated in this diagram. A polarity and the like of the reception light signal with respect to the reception light intensity are not limited to the example of this diagram. For example, the light receiving unit 180 may have a configuration in which, as the reception light intensity of the light receiving element 18 is increased, the larger reception light signal is output in a negative direction. In the following description, the polarity and the like in a process are also set as appropriate.

In the example of this diagram, if the internal reflection light is received, the reception light signal rises and is saturated. Then, if the saturation state is escaped, the signal level returns to a zero level (reference level), and a signal value having a negative polarity is further output from the detection circuit 181. Then, the reception light signal becomes the local minimum value, and then gradually returns to the reference level. The object peak exists from a time of taking this local minimum value to the return to the reference level.

### <Detection Process>

A detection process of detecting a peak from a reception light signal will be described below. In the distance measurement apparatus 10 according to the present embodiment, the switching control unit 121 switches a first detection process and a second detection process as the detection process.

The first detection process is a detection process based on a height of a level of the reception light signal output from the light receiving unit 180 with respect to a reference level. Specifically, in the first detection process, first, a value L obtained by subtracting the reference level from the reception light signal level is calculated. Then, a period in which the value L exceeds a predetermined threshold value is specified, and a point at which the value L becomes maximum in the period is detected as a peak position. Meanwhile, a process for improving distance accuracy may be further performed by using this point and several points around this point, and the peak position may be specified. The predetermined threshold value is set to be more than a noise level. In the first detection process, a peak having a peak intensity less than the reference level is not detected.

The second detection process is a detection process based on a slope of a level of the reception light signal output from the light receiving unit 180. Specifically, in the second detection process, a derivative value at each point (time point) of the reception light signal is calculated, and a point at which a polarity of the calculated derivative value is switched from positive to negative is detected as the peak position. Meanwhile, a process for improving the distance accuracy may be further performed by using this point and several points around this point, and the peak position may be specified.

Usually, in the first detection process, the peak detection with more accuracy can be performed than in the second detection process, and thus it is preferable to preferentially use the first detection process as much as possible. Meanwhile, in the example of Fig. 5, a peak intensity of the object peak is less than the reference level, and the object peak is not detected in the first detection process. On the other hand, such an object peak can be detected in the second detection process. With the distance measurement apparatus 10 according to the present embodiment, while giving priority to the first detection process, switching is performed such that the second detection process is performed in a situation in which the detection in the first detection process is difficult. Therefore, it is possible to increase a probability of the distance measurement in a situation in which there is an influence of an attached-matter, while maintaining high detection accuracy.

The switching control unit 121 according to the present embodiment performs switching such that after the light reception of the internal reflection light, the second detection process is to be performed until the reception light signal normally returns to the reference level and the first detection process is to be performed at other times. By doing so, it is possible to detect the object peak even under a situation in which there is an influence of saturation by the internal reflection peak.

### <Saturation Period>

Hereinafter, a period having an influence of saturation by an internal reflection peak will be referred to as a saturation period. A waveform of the internal reflection peak differs depending on a type of an attached-matter, and as an example, in a case where the attached-matter is water, the waveform is affected by saturation for a long period of time.

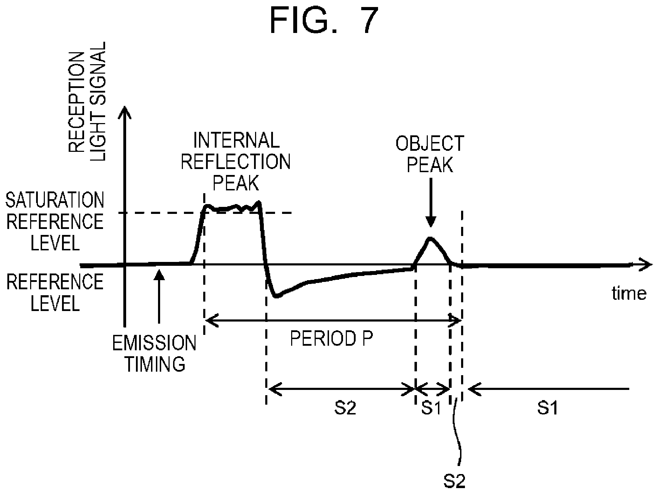

In Fig. 5 and Fig. 7 to be described below, a period P indicates a saturation period. A start point of the saturation period is a start point of saturation in the internal reflection peak. A state in which a reception light signal output from the light receiving unit 180 exceeds a predetermined saturation reference level is defined as a state in which the light receiving unit 180 is saturated. That is, the switching control unit 121 specifies, as the start point of the saturation period, a point at which the reception light signal becomes equal to or more than the predetermined saturation reference level for the first time after light emission. The saturation reference level is, for example, slightly smaller than a saturation level of the light receiving unit 180. Here, the saturation level means the maximum reception light intensity that can be detected without saturating the light receiving unit 180.

An end point of the saturation period is a point at which the reception light signal normally returns to a reference level. For example, an earlier time point of a time point of the second zero-crossing after the saturation and a time point of the first convergence after the saturation can be defined as the end point of the saturation period. Further, the switching control unit 121 determines that a case where a state in which a signal value is within a predetermined convergence level range is continued for a predetermined length is a converging state. In a case where it is determined that the converging state has occurred, a time point when that state is started, that is, a time point when the signal value changes from outside the convergence level range to within the convergence level range, is specified as the time point of the first convergence after the saturation. The convergence level range is a range including zero, an upper limit of the convergence level range is slightly greater than zero, and a lower limit of the convergence level range is slightly less than zero. Meanwhile, a difference between the upper limit of the convergence level range and zero can be made greater than a difference between the lower limit of the convergence level range and zero. This is because, for example, in a case where ambient light is incident onto the distance measurement apparatus 10, the reception light signal may converge to a level greater than zero by the amount of ambient light.

The switching control unit 121 specifies the end point of the saturation engine by selecting the earlier time point between the time point of the second zero-crossing after the saturation and the time point of the first convergence after the saturation. Either the time point of the second zero-crossing after the saturation or the time point of the first convergence after the saturation may not be present. In that case, the switching control unit 121 sets a time point that can be specified between the time point of the second zero-crossing after the saturation and the time point of the first convergence after the saturation, as the end point of the saturation period.

In addition, the end point of the saturation period may be a first time point at which the reception light signal is within the convergence level range and the slope of the reception light signal is within a predetermined range including zero after the end of the saturation state, or may be a time point at which such a state is continued for a predetermined number of points.

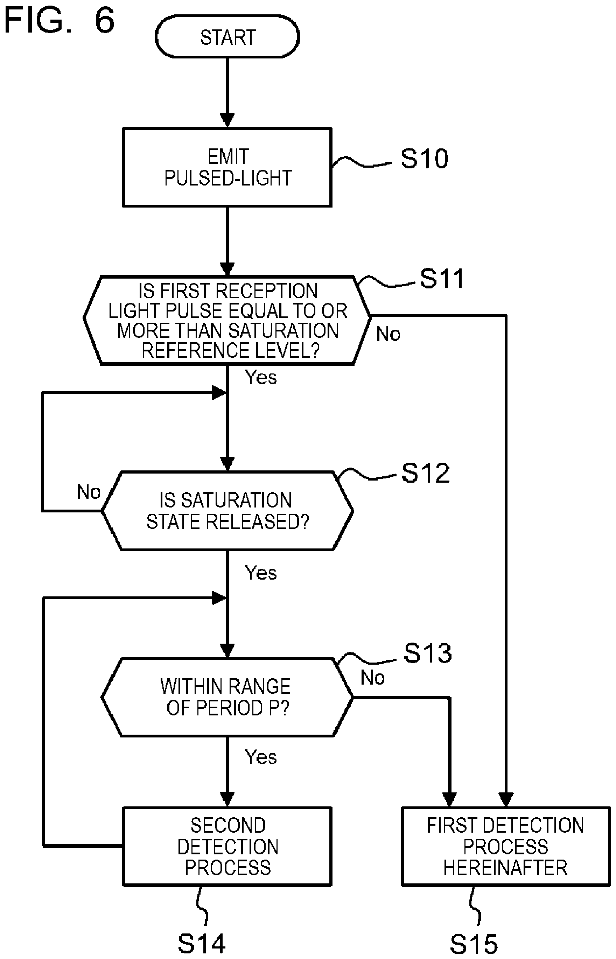

Fig. 6 is a flowchart illustrating a flow of a first example of a switching process performed by the switching control unit 121 according to the present embodiment.

First, if pulsed-light is emitted (S10), the switching control unit 121 monitors a reception light signal and determines whether or not a first reception light pulse has an intensity equal to or more than a saturation reference level (S11). In a case where the first reception light pulse does not have the intensity equal to or more than the saturation reference level (No in S11), the switching control unit 121 sets a first detection process as a detection process to be performed after the first reception light pulse (S15). After that, the first detection process is set as a detection process to be performed for all detection values until the next pulsed-light emission.

In a case where the first reception light pulse has the intensity equal to or more than the saturation reference level (Yes in S11), the switching control unit 121 then determines whether or not a saturation state of the reception light signal is released (S12). In a case where the saturation state is not released (No in S12), the switching control unit 121 continues monitoring the detection value from the light receiving unit 180 and this determination is repeated until the saturation state is released (S12). If the saturation state is released (Yes in S12), the switching control unit 121 determines whether or not the detection value (point of the reception light signal) after the saturation state is released is within a range of the period P by the method described above (S13). In a case where the detection value is within the range of the period P (saturation period) (Yes in S13), the switching control unit 121 sets a second detection process as a detection process to be performed on the detection value (S14). Next, the switching control unit 121 determines whether or not the next detection value is within the range of the period P (S13). In this manner, the determination in S13 for each detection value and the setting of the second detection process are repeated until the range of the period P is exceeded. If the detection value becomes out of the range of the period P (No in S13), the switching control unit 121 sets the first detection process as a detection process to be performed on the detection value (S15). After that, the first detection process is set as a detection process to be performed for all detection values until the next pulsed-light emission.

With the above flow, the first detection process or the second detection process is set for all the detection values on which the peak detection is to be performed. If the detection process to be performed is set by the switching control unit 121, the set detection process is executed by the control unit 120. With the example of this diagram, it is possible to perform switching and detection with respect to the reception of light in near real time. Meanwhile, for the peak detection, that is, for specifying whether or not a certain detection value is a peak, a plurality of detection values before and after the detection value may be necessary. Therefore, the execution of the detection process by the control unit 120 may be delayed from the setting of the detection process by the switching control unit 121. A setting content of the detection process for each detection value by the switching control unit 121 may be held in a storage unit (for example, the storage device 808) at least temporarily. In addition, the determination of the detection process by the switching control unit 121 and the peak detection by the control unit 120 may be performed collectively for each emission of light or may be performed collectively for each frame.

With the process example of Fig. 6, the detection process is set as illustrated in Fig. 5. In Fig. 5, "S2" indicates a period in which the peak detection is performed in the second detection process, and "S1" indicates a period in which the peak detection is performed in the first detection process.

Fig. 7 is a diagram illustrating another example of the waveform of the reception light signal of the light receiving unit 180. In the example of this diagram, an object peak is located within a saturation period. This is because it cannot be said that the reception light signal converges to a reference level at a position of the object peak. On the other hand, a peak intensity of the object peak exceeds the reference level, and the object peak can be detected by a first detection process.

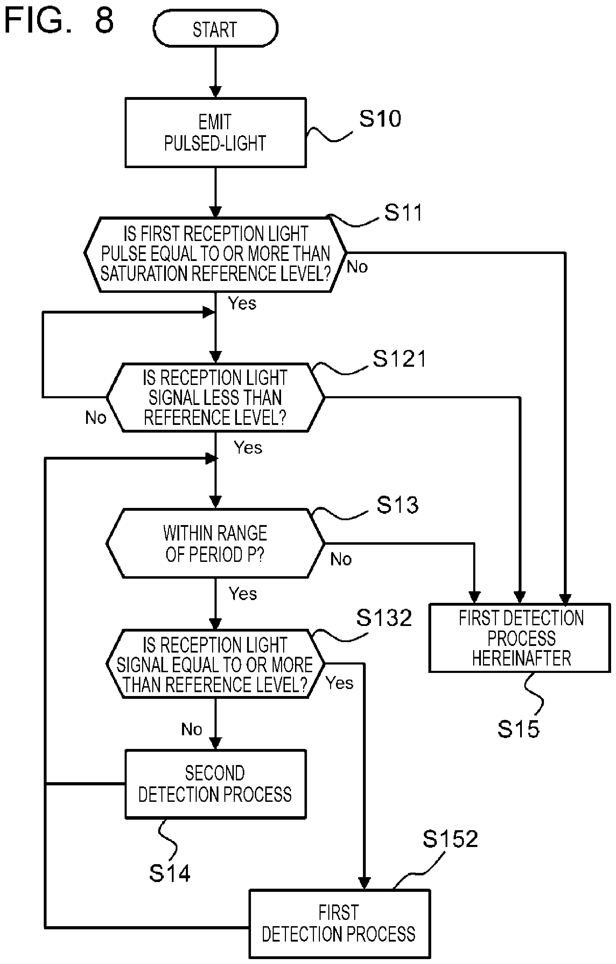

Fig. 8 is a flowchart illustrating a flow of a second example of the switching process performed by the switching control unit 121 according to the present embodiment.

First, if pulsed-light is emitted (S10), the switching control unit 121 monitors a reception light signal and determines whether or not a first reception light pulse has an intensity equal to or more than a saturation reference level (S11). In a case where the first reception light pulse does not have the intensity equal to or more than the saturation reference level (No in S11), the switching control unit 121 sets a first detection process as a detection process to be performed after the first reception light pulse (S15). After that, the first detection process is set as a detection process to be performed for all detection values until the next pulsed-light emission.

In a case where the first reception light pulse has the intensity equal to or more than the saturation reference level (Yes in S11), the switching control unit 121 next determines whether or not the reception light signal is less than a reference level (S121). In a case where the reception light signal is not less than the reference level (No in S121), the switching control unit 121 continues monitoring the detection value from the light receiving unit 180 and this determination is repeated until the reception light signal becomes less than the reference level (S121). If the reception light signal becomes less than the reference level (Yes in S121), the switching control unit 121 determines whether or not the detection value after the detection value becomes less than the reference level is within a range of the period P by the method described above (S13). In a case where the detection value is within the range of the period P (Yes in S13), the switching control unit 121 then determines whether or not the detection value is equal to or more than the reference level (S132). In a case where the detection value is not equal to or more than the reference level (No in S132), the switching control unit 121 sets a second detection process as a detection process to be performed on the detection value (S14). Next, the switching control unit 121 determines whether or not the next detection value is within the range of the period P (S13). In a case where the detection value is equal to or more than the reference level in S132 (Yes in S132), the switching control unit 121 sets a first detection process as a detection process to be performed on the detection value (S152). Next, the switching control unit 121 returns to S13 with respect to the next detection value, and determines whether or not the value is within the range of the period P. In a case where the detection value is not within the range of the period P in S13 (No in S13), the switching control unit 121 sets the first detection process as a detection process to be performed on the detection value (S15). After that, the first detection process is set as a detection process to be performed for all detection values until the next pulsed-light emission.

With the above flow, the first detection process or the second detection process is also set for all the detection values on which the peak detection is to be performed. If the detection process to be performed is set by the switching control unit 121, the set detection process is executed by the control unit 120. With the example of this diagram, it is possible to perform switching and detection with respect to the reception of light in near real time. Meanwhile, for the peak detection, that is, for specifying whether or not a certain detection value is a peak, a plurality of detection values before and after the detection value may be necessary. Therefore, the execution of the detection process by the control unit 120 may be delayed from the setting of the detection process by the switching control unit 121. A setting content of the detection process for each detection value by the switching control unit 121 may be held in a storage unit at least temporarily. In addition, the determination of the detection process by the switching control unit 121 and the peak detection by the control unit 120 may be performed collectively for each emission of light or may be performed collectively for each frame.

With the process example of Fig. 8, the detection process is set as illustrated in Fig. 7. In Fig. 7, "S2" indicates a period in which the peak detection is performed in the second detection process, and "S1" indicates a period in which the peak detection is performed in the first detection process. With the process example, the first detection process can be applied to the peak that can be detected by the first detection process even within a saturation period.

As described above, with the present embodiment, the switching control unit 121 switches the detection process of the reflection light from the target object 30 by using the light reception result of the internal reflection light by the light receiving unit 180. Therefore, it is possible to improve a probability of performing the distance measurement under a situation in which the influence of the attached-matter exists.

### (Second Embodiment)

The distance measurement apparatus 10 according to a second embodiment is the same as the distance measurement apparatus 10 according to the first embodiment, except that the switching control unit 121 switches a detection process by using a distribution of a light reception result of internal reflection light in a frame.

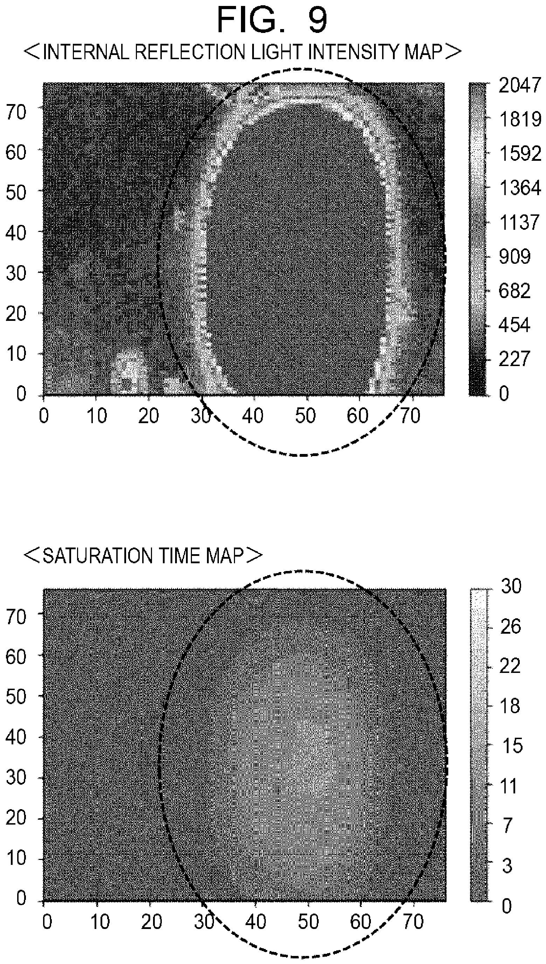

Fig. 9 is a diagram illustrating a map indicating a distribution of a reception light intensity of internal reflection light in a frame (hereinafter, referred to as an "internal reflection light intensity map") and a map indicating a distribution of a saturation time (hereinafter, referred to as a "saturation time map"). The two maps in this diagram are results which are simultaneously measured. In each map, an emission direction of pulsed-light and the light reception result of the internal reflection light are associated. The map of this diagram is acquired in a state in which an attached-matter exists at the transmissive member 20, and an influence of the attached-matter appears in a region inside a broken line ellipse.

The internal reflection light intensity map indicates a peak intensity (maximum intensity) at an internal reflection peak for each emitted light as an internal reflection light intensity. The saturation time map indicates a length of a saturation period described above for each emission light. Meanwhile, the internal reflection light intensity map of this diagram illustrates a difference between an internal reflection light intensity at a time of measurement and an internal reflection light intensity measured in an initial state of a situation in which there is no attached-matter. In addition, the saturation time map of this diagram illustrates a difference between a saturation time at the time of the measurement and a saturation time measured in the initial state of the situation in which there is no attached-matter. Since a certain amount of internal reflection light occurs even in a state in which there is no attached-matter, an influence of the attached-matter can be further clarified by taking a difference with the initial state.

As can be seen from this diagram, the internal reflection light intensity is extremely high in a region corresponding to the attached-matter. In addition, it is understood that the saturation time is also longer in the region corresponding to the attached-matter. In addition, it is understood that the saturation time is increased at a position closer to a center in the region in which the attached-matter exists. In the region in which the saturation time is long as described above, it is preferable to perform the second detection process since there is a probability that an object peak occurs during the saturation period. The switching control unit 121 according to the present embodiment executes the following process.

The switching control unit 121 switches a detection process by using an intensity of the internal reflection light in the light reception result. Specifically, the switching control unit 121 specifies an attached-matter region corresponding to a region in which an attached-matter exists in the transmissive member 20, by using a distribution of a light reception result of the internal reflection light in a plurality of emission directions of light, and switches the detection process for each emission direction based on a position in the attached-matter region. With the distance measurement apparatus 10 according to the present embodiment, it is not necessary to specify the saturation time.

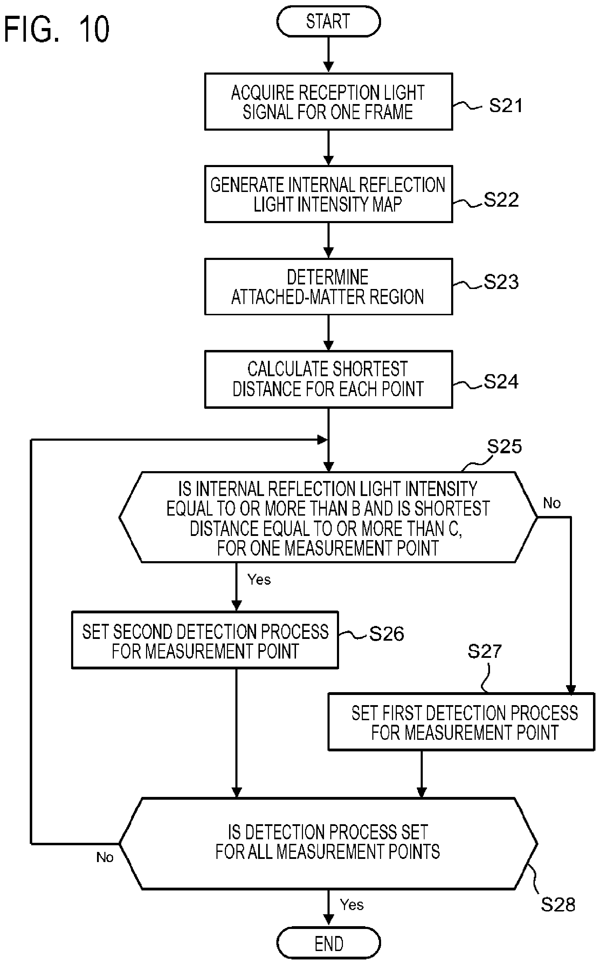

Fig. 10 is a flowchart illustrating a flow of a process performed by the switching control unit 121 according to the present embodiment. If measurement is completed for a certain frame, the switching control unit 121 acquires reception light signals of all measurement points in the frame (S21). The switching control unit 121 generates an internal reflection light intensity map by using an internal reflection light intensity corresponding to a plurality of emission directions (S22). As described above, it is preferable that the internal reflection light intensity used here is the amount of change from a value in an initial state. From the internal reflection light intensity map, it is possible to specify a region in which an attached-matter occurs within a scanning range. Specifically, the switching control unit 121 specifies a region, in which the internal reflection light intensity is equal to or more than the predetermined value A, in the internal reflection light intensity map, as an attached-matter region (S23).

Then, the switching control unit 121 calculates the shortest distance from an outer edge of the attached-matter region, for each point (each emission direction) in the specified attached-matter region (S24). As the shortest distance becomes longer, the point is close to the center of the attached-matter region and the saturation time tends to become longer.

Next, the switching control unit 121 determines whether or not the internal reflection light intensity is equal to or more than the predetermined value B and the shortest distance from the outer edge of the attached-matter region is equal to or more than the predetermined value C, for a certain measurement point in the frame (S25). In a case where the internal reflection light intensity is equal to or more than the predetermined value B and the shortest distance from the outer edge of the attached-matter region is equal to or more than the predetermined value C (Yes in S25), the switching control unit 121 sets a second detection process as a detection process of a peak detection, for the measurement (S26). In a case where the condition in which the internal reflection light intensity is equal to or more than the predetermined value B and the shortest distance from the outer edge of the attached-matter region is equal to or more than the predetermined value C is not satisfied (No in S25), the switching control unit 121 sets a first detection process as a detection process of a peak detection, for the measurement (S27). If any one of S26 or S27 is performed, the switching control unit 121 determines whether or not the detection process is set for all the measurement points in the frame (S28). In a case where the detection process is not set at all the measurement points (No in S28), the process of S25 is performed for a measurement point on which the detection process is not set yet. In a case where the detection process is set at all the measurement points (Yes in S28), the switching control unit 121 ends the process for the frame.

In this manner, the detection process to be applied is set for all the measurement points in the frame. Then, the control unit 120 detects the object peak from the reception light signal of each measurement point by using the set detection process, and calculates the distance. In this manner, a distance map of the frame is obtained. Timings at which the setting of the detection process by the switching control unit 121 and the distance calculation by the control unit 120 are performed may be any timing. For example, the setting and the distance calculation may be performed for each frame or may be performed for every predetermined number of frames. The timing (unit) of performing the setting of the detection process by the switching control unit 121 and the distance calculation by the control unit 120 may be different from each other.

The control unit 120 may perform the peak detection by the second detection process on all the reception light signals at the measurement points for which the second detection process is set, or may perform the peak detection by the second detection process on only some of the reception light signals. In the latter case, specifically, the control unit 120 performs the second detection process until a predetermined time elapses from the emission of the pulsed-light, and performs the peak detection by the first detection process on the remaining reception light signals. This is because, when a sufficient time elapses from the emission, there is a low probability that the detection of the object peak is affected by the internal reflection peak.

Instead of the internal reflection light intensity map, the switching control unit 121 may generate a saturation time map by using a saturation time corresponding to the plurality of emission directions or the amount of change from the initial value of the saturation time, and may set the second detection process on a point of which a saturation time is equal to or more than a predetermined value D. Even in this case, as described above, the control unit 120 may perform the peak detection by the second detection process on all the reception light signals at the measurement points for which the second detection process is set, or may perform the peak detection by the second detection process on only some of the reception light signals. In the internal reflection light intensity map or the saturation time map, an image may be distorted due to the effect of the orbit of the movable mirror 16 and the optical lens. Since such distortion is known, a process of correcting each map by using a predetermined correction parameter may be performed. In this case, an outer shape of the map may not be a rectangle. Alternatively, a process of correcting the distortion of the projected target object, an attached-matter, or the like may be performed as necessary while the outer shape of the map is maintained as a rectangle.

With the distance measurement apparatus 10 according to the present embodiment, the same operations and effects as in the distance measurement apparatus 10 according to the first embodiment can be obtained.

As above, the embodiments are described with reference to the drawings, but these are examples of the present invention, and various other configurations other than the embodiment and the examples described above can be adopted. For example, in the sequence diagram and the flowchart used in the above description, a plurality of steps (processes) are described in order, but the execution order of the steps executed in each embodiment is not limited to the order of the description. In each of the embodiments, the order of the steps illustrated in the diagram can be changed within a range that does not affect the content. Further, the above embodiments can be combined within a range where their contents do not contradict each other.

The present application claims priority based on Japanese Patent Application No. 2021-187618 filed on November 18, 2021, the entire content of which is incorporated herein by reference.

### REFERENCE SIGNS LIST

- 10: distance measurement apparatus
- 14: light source
- 16: movable mirror
- 18: light receiving element
- 20: transmissive member
- 30: target object
- 80: integrated circuit
- 120: control unit
- 121: switching control unit
- 140: light emitting unit
- 141: drive circuit
- 160: scanning range
- 163: drive circuit
- 164: movable reflection unit
- 180: light receiving unit
- 181: detection circuit

## Claims

1. A distance measurement apparatus that emits light through a transmissive member and detects reflection light from a target object, the distance measurement apparatus comprising:
a light receiving unit that receives internal reflection light including reflection light reflected by the transmissive member and the reflection light from the target object; and
a switching control unit that switches a detection process of the reflection light from the target object by using a light reception result of the internal reflection light by the light receiving unit.

2. The distance measurement apparatus according to claim 1,
wherein the switching control unit switches between a first detection process and a second detection process as the detection process,
the first detection process is a detection process based on a height of a level of a reception light signal output from the light receiving unit, with respect to a reference level, and
the second detection process is a detection process based on a slope of the level of the reception light signal output from the light receiving unit.

3. The distance measurement apparatus according to claim 2,
wherein the switching control unit performs switching such that after the light reception of the internal reflection light, the second detection process is to be performed until the reception light signal normally returns to the reference level and the first detection process is to be performed at other times.

4. The distance measurement apparatus according to any one of claims 1 to 3,
wherein the switching control unit switches the detection process by using an intensity of the internal reflection light in the light reception result.

5. The distance measurement apparatus according to claim 4,
wherein the switching control unit is configured to
specify an attached-matter region corresponding to a region in which an attached-matter exists in the transmissive member by using a distribution of the light reception result of the internal reflection light in a plurality of light emission directions, and
switch the detection process for each emission direction based on a position in the attached-matter region.
